# EUROPEAN PATENT APPLICATION

(11) **EP 4 459 700 A1**
(43) Date of publication of application: **06.11.2024**
(21) Application number: 24161585.5
(22) Date of filing: 05.03.2024
(51) Int. Cl.: H01M 4/134, H01M 4/36, H01M 4/38, H01M 4/587, H01M 10/0568, H01M 10/0569, H01M 10/44, H01M 4/133, H01M 10/0525

(54) **RECHARGEABLE LITHIUM BATTERY**

(30) Priority: 03.05.2023 KR 20230057971
(71) Applicant: Samsung SDI Co., Ltd., Yongin-si, Gyeonggi-do 17084 (KR)
(72) Inventor: CHAE, Sora, 17084 Yongin-si (KR); KIM, Beom Kwon, 17084 Yongin-si (KR); BAE, Nanyoung, 17084 Yongin-si (KR); KIL, Ki Chun, 17084 Yongin-si (KR); KIM, Suji, 17084 Yongin-si (KR)
(74) Representative: Marks & Clerk LLP

(57) **Abstract**

A rechargeable lithium battery includes a negative electrode comprising a current collector, a negative active material layer on the current collector, and lithium dendrites on a surface of the negative active material layer and having an average size (e.g., an average length) of about 5 µm or less and a rod-like shape; a positive electrode; and a non-aqueous electrolyte.

## Description

### BACKGROUND

### 1. Field

One or more embodiments of the present disclosure relate to a rechargeable lithium battery.

### 2. Description of the Related Art

With the recent rapid popularization of electronic devices, such as mobile phones and/or laptop computers and/or of electric vehicles, utilizing batteries, demands for rechargeable batteries with relatively high capacity and lighter weight have also increased.

Various investigation into the high-capacity rechargeable lithium batteries has been being conducted and/or proposed. For improving capacity of a battery, developments for increasing voltage and current density of the battery have made progress. However, the high voltage causes the structure of the positive electrode of the battery to collapse, thus, to prevent or reduce the collapse of the structure of the positive electrode, doping to strengthen an internal structure of the positive active material of the positive electrode and/or a coating layer formation to strengthen a surface of the positive active material is being studied or proposed in order to solve these problems. These, however, may cause an increase in resistances of the positive active materials, thereby decreasing low temperature performances of the batteries.

The research for securing a low temperature performance of a battery, for example, at about -10 °C has also been actively conducted and made progress.

### SUMMARY

One or more aspects of embodiments of the present disclosure are directed toward a rechargeable lithium battery exhibiting excellent or suitable low temperature performances.

Additional aspects will be set forth in part in the description which follows and, in part, will be apparent from the description, or may be learned by practice of the presented embodiments of the disclosure.

According to one or more embodiments of the present disclosure, a rechargeable lithium battery includes a negative electrode including a current collector (e.g., a negative electrode current collector), a negative active material layer on the current collector, and lithium dendrites on a surface of the negative active material layer and having an average size (e.g., an average length) of about 5 µm or less and a rod-like shape; a positive electrode; and a non-aqueous electrolyte.

The rechargeable lithium battery may be obtained by performing a formation charge and discharge. The formation charge and discharge may be performed at least twice by charging at a room temperature and discharging at a subzero temperature. The room temperature charge may be performed at about 10 °C to about 30 °C. The discharge may be performed at less than about 0 °C and more than about -20 °C.

In one or more embodiments, the formation charge and discharge may be performed by discharging at a subzero temperature and charging at a room temperature for two to five cycles.

In one or more embodiments, lithium dendrites may have an average size of about 1 µm to about 5 µm.

The rechargeable lithium battery according to one or more embodiments may exhibit excellent or suitable low temperature characteristics.

At least some of the above and other features of the invention are set out in the claims.

### BRIEF DESCRIPTION OF THE DRAWINGS

The accompanying drawings are included to provide a further understanding of the present disclosure, and is incorporated in and constitutes a part of this specification. The drawings illustrate example embodiments of the present disclosure and, together with the description, serve to explain principles of present disclosure.
FIG. 1 is a schematic diagram showing a rechargeable lithium battery according to one or more embodiments of the present disclosure.
FIG. 2A and FIG. 2B are each a scanning electron microscopy (SEM) image of the negative electrode of Example 1 after formation charging and discharging according to one or more embodiments of the present disclosure.
FIG. 3A and FIG. 3B are each an SEM image of the negative electrode of Comparative Example 1 after formation charging and discharging according to one or more embodiments of the present disclosure.
FIG. 4 is an image of the negative electrode of Comparative Example 2 after formation charging and discharging according to one or more embodiments of the present disclosure.

### DETAILED DESCRIPTION

The present disclosure may be modified in many alternate forms, and thus specific embodiments will be exemplified in the drawings and described in more detail. It should be understood, however, that it is not intended to limit the present disclosure to the particular forms disclosed, but rather, is intended to cover all modifications, equivalents, and alternatives falling within the scope of the present disclosure.

Hereinafter, embodiments of the present disclosure are described in more detail. However, these embodiments are merely examples, the present disclosure is not limited thereto, and the present disclosure is defined by the scope of claims and equivalents thereof.

Terms utilized in the present disclosure are utilized to explain embodiments, but are not intended limit the present disclosure. As utilized herein, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

The term "combination thereof' may include a mixture, a laminate, a complex, a copolymer, an alloy, a blend, and a reactant of constituents.

The terms "comprise(s)/comprising", "include(s)/including", or "have(has)/having" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

The drawings show that the thickness may be enlarged in order to clearly show the one or more suitable layers and regions, and the same reference numerals are given to similar parts throughout the present disclosure. When an element, such as a layer, a film, a region, a plate, and/or the like is referred to as being "on" or "over" another part, it may include cases where it is "directly on" another element, but also cases where there is another element (e.g., an intervening element) therebetween. In contrast, when an element is referred to as being "directly on" another element, there are no intervening elements present.

In one or more embodiments, as utilized herein, the term "layer" may include a shape totally formed on the entire surface or a shape on partial surface of an element, when viewed from a plane view.

Herein, "or" is not to be construed as an exclusive meaning, for example, "A or B" is construed to include A, B, A+B, and/or the like. Further, as used herein, the term "and/or" includes any and all combinations of one or more of the associated listed items. The "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

As utilized herein, when a definition is not otherwise provided, "copolymerization" refers to a block copolymerization, a random copolymerization, a graft copolymerization, or an alternating copolymerization, and "copolymer" refers to a block copolymer, a random copolymer, a graft copolymer, or an alternating copolymer.

As utilized herein, when a definition is not otherwise provided, a particle diameter or size may be an average particle diameter. Such a particle diameter indicates an average particle diameter or size (D50) where a cumulative volume is about 50 volume% in a particle size distribution. The particle size (D50) may be measured by a method well suitable (known) to those skilled in the art, for example, by a particle size analyzer, or by a transmission electron microscopic image, or a scanning electron microscopic image. In some embodiments, a dynamic light-scattering measurement device is utilized to perform a data analysis, and the number of particles is counted for each particle size range, and from this, the average particle diameter (D50) value may be easily obtained through a calculation. When particles are spherical, "diameter" or "size" indicates a particle diameter or an average particle diameter, and when the particles are non-spherical, such as rods, the "diameter" or "size" indicates a major axis length or an average major axis length.

A rechargeable lithium battery according to one or more embodiments includes: a negative electrode including a current collector (e.g., a negative electrode current collector), a negative active material layer on the current collector, and lithium dendrites on a surface of the negative active material layer and having an average size (e.g., an average length) of about 5 µm or less and a rod-like shape; a positive electrode; and a non-aqueous electrolyte.

In one or more embodiments, the average size of lithium dendrite may be measured from the average value of the length of dendrite identified in the SEM image for the negative active material layer of the negative electrode.

Such a rechargeable lithium battery is in a state of formation charging and discharging and during the general formation charging and discharging, lithium dendrites are not formed in the negative electrode. However, in one or more embodiments of the present disclosure, lithium dendrites, for example, small-sized lithium dendrites with a size of about 5 µm or less, are formed by adjusting the condition of the formation charging and discharging.

If (e.g., when) lithium dendrites, for example, the small-sized lithium dendrites with a size of about 5 µm or less, are included in the negative electrode, the interface resistance of the rechargeable lithium battery may be reduced, which renders to enhance lithium ion transfer and promote better initial performance, for example, if (e.g., when) the rechargeable lithium battery operates at low temperatures, thereby improving low temperature characteristics of the battery. The ability of impregnating in electrolyte may also be improved.

In one or more embodiments, the lithium dendrites may have an average size of about 5 µm or less, about 1 µm to about 5 µm, or about 1 µm to about 3 µm. If (e.g., when) the average size of lithium dendrites is more than about 5 µm, the size of lithium dendrites is too large, which may cause undesired side reactions so that the battery performances such as safety or cycle-life characteristics may be severely deteriorated.

For preparing the small-sized lithium dendrites inside the negative electrode through the formation charging and discharging, the formation charge and discharge may be suitably performed by discharging the rechargeable lithium battery at a subzero temperature and charging at a room temperature, twice or more. According to one or more embodiments, the charge and the discharge may be performed twice to five times. The room temperature charge may be performed at about 10 °C to about 30 °C. The discharge may be performed at more than about -20 °C and less than 0 °C.

Even if (e.g., when) the formation charge and discharge is performed at about 0 °C or less for discharging and at room temperature for charging, if (e.g., when) it is performed only once, the desired or suitable lithium dendrites are not formed.

When the formation charge and discharge is performed twice or more, if (e.g., when) even one charge and discharge are both performed at a room temperature, the negative active material of the negative electrode does not sufficiently activate, which results in a remaining negative active material which does not participate in the charging reaction, and thus, lithium dendrites are not formed, and the effects for improving low temperature characteristics due to the formation of the small-sized lithium dendrites may be not expected.

In some embodiments, charging performed at a low temperature of a subzero temperature and discharging performed at a room temperature decrease the fluidity of reversible lithium, thereby forming no lithium dendrites, and thus, the effects for improving low temperature characteristics due to the formation of the small-sized lithium dendrites may be not expected. Even if (e.g., when) both charging and discharging are performed at low temperatures of subzero temperature, the fluidity of reversible lithium may be decreased during charging, which cause to form no lithium dendrites, and thus, the effects for improving low temperature characteristics due to the formation of the small-sized lithium dendrites may be not expected.

Even if (e.g., when) the discharge is performed at a subzero temperature, if (e.g., when) it is performed at too low temperature of about -20 °C or less, fluidity of lithium ions may be significantly reduced, which causes no lithium dendrites to be formed.

As such, the effect of improving the low temperature characteristic due to small-sized lithium dendrites being positioned on the surface of the negative active material layer may be realized only when formation charging and discharging including discharging at a subzero temperature and charging at a room temperature is carried out for twice or more.

The charging may be performed under a condition of about 0.2 C to about 2 C, about 4.2 V to about 4.7 V, a cut-off of about 0.01 C to about 0.1 C and the discharging may be performed under a condition of about 0.1 C to about 0.5 C and a cut-off of about 2.5 V to about 3.5 V.

In one or more embodiments, the negative electrode may include a negative active material layer including a negative active material and a current collector supporting the negative active material layer.

In one or more embodiments, the negative active material may include (e.g., be) a carbon-based negative active material, a silicon-based negative active material, or a combination thereof. According to one or more embodiments, the negative active material may be the silicon-based negative active material.

The carbon-based negative active material may be (e.g., include) crystalline carbon, amorphous carbon, or a combination thereof. The crystalline carbon may be unspecified shaped (e.g., irregularly shaped), sheet, flake, spherical, or fiber shaped natural graphite or artificial graphite. The amorphous carbon may be soft carbon, hard carbon, mesophase pitch carbide, sintered cokes, or one or more combinations thereof.

The silicon-based negative active material may be Si, a Si-C composite, SiOₓ (0<x<2), Si-Q alloy (wherein Q is an element selected from an alkali metal, an alkaline-earth metal, a Group 13 element, a Group 14 element, a Group 15 element, a Group 16 element, a transition metal, a rare earth element, and one or more combinations thereof, and not Si), or one or more combinations thereof, or at least one (e.g., one or more) of these materials may be mixed with SiO₂.

The element Q may be selected from magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), polonium (Po), and one or more combinations thereof.

In one or more embodiments, the silicon-based negative active material may be a Si-C composite. The Si-C composite may be (e.g., include) silicon particles and amorphous carbon coated on the surface of the silicon particles. For example, in one or more embodiments, the silicon-carbon composite may include secondary particles in which silicon primary particles are agglomerated, and an amorphous carbon coating layer on (e.g., positioned on) a surface of the secondary particle. The amorphous carbon may be (positioned) between the silicon primary particles, for example, so that the silicon primary particles may be coated with the amorphous carbon. In one or more embodiments, the silicon-carbon composite (e.g., the Si-C composite) may also include a core in which silicon particles are distributed in an amorphous carbon matrix and an amorphous carbon coating layer coated on a surface of the core.

The secondary particle is positioned at the center of the Si-C composite, so it may be referred to as a core or a center part of the Si-C composite. The amorphous carbon coating layer may be referred to as an outer part or a shell of the Si-C composite.

The silicon particle may be nano silicon particles. The nano silicon particles may have a particle diameter (e.g., average particle diameter) of about 10 nm to about 1,000 nm, or according to one or more embodiments, may have a particle diameter (e.g., average particle diameter) of about 20 nm to about 900 nm, about 20 nm to about 800 nm, about 20 nm to about 500 nm, about 20 nm to about 300 nm, or about 20 nm to about 150 nm. If (e.g., when) the average particle diameter of the silicon particles is within the range, the extreme volume expansion caused during charge and discharge may be suppressed or reduced, and a breakage of the conductive path due to crushing of particle may be prevented or reduced.

A mixing ratio of the nano silicon particles to amorphous carbon may be a weight ratio of about 1:99 to about 60:40.

In one or more embodiments, the secondary particle or the core may further include crystalline carbon. If (e.g., when) the silicon-carbon composite (Si-C composite) further includes crystalline carbon, the Si-C composite may include secondary particles in (each) which silicon primary particles and crystalline carbon are agglomerated and an amorphous carbon coating layer on the surface(s) of the secondary particle(s) (e.g., on a surface of each of the secondary particles).

If (e.g., when) the Si-C includes silicon particles, crystalline carbon, and amorphous carbon, an amount of the amorphous carbon may be about 30 wt% to about 70 wt% based on the total 100 wt% of the Si-C composite and an amount of the crystalline carbon may be about 1 wt% to about 20 wt% based on the total 100 wt% of the Si-C composite. An amount of the silicon particles may be about 20 wt% to about 70 wt% based on the total 100 wt% of the Si-C composite, or according to some embodiments, may be about 30 wt% to about 60 wt%.

The particle diameter of the Si-C composite may be appropriately adjusted, and it is not limited thereto.

If (e.g., when) the amorphous carbon is positioned around (e.g., surrounding) the surface of the secondary particle, a thickness may be suitably adjusted, for example, may be about 5 nm to about 100 nm.

In one or more embodiments, the Si-C composite may be included as a first negative active material, and crystalline carbon may be included as a second negative active material. A mixing ratio of the first negative active material to the second negative active material may be about 1:99 to about 50:50. In some embodiments, the negative active material may include the first negative active material and the second negative active material at a weight ratio of about 5:95 to about 20:80.

In one or more embodiments, the negative active material layer may include a binder, and may further include a conductive material. An amount of the binder may be about 1 wt% to about 5 wt% based on the total 100 wt% of the negative active material layer. An amount of the conductive material may be about 1 wt% to about 5 wt% based on the total 100 wt% of the negative active material layer.

The binder improves binding properties of negative active material particles with one another and with the current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or one or more combinations thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or one or more combinations thereof.

If (e.g., when) the aqueous binder is utilized as a binder for the negative electrode, a cellulose-based compound may be further utilized to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material may be included to provide electrode conductivity, and any electrically conductive material may be utilized as a conductive material unless it causes a chemical change. Non-limiting examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or one or more mixtures (and/or combinations) thereof.

The current collector may include one selected from a copper foil, a nickel foil, a stainless steel foil, a titanium foil, a nickel foam, a copper foam, a polymer substrate coated with a conductive metal, and one or more combinations thereof, but embodiments of the present disclosure are not limited thereto.

The positive electrode may include a current collector (e.g., a positive electrode current collector) and a positive active material layer including a positive active material formed on the current collector.

The positive active material may include one or more lithiated intercalation compounds that reversibly intercalate and deintercalate lithium ions. In some embodiments, one or more composite oxides of a metal selected from cobalt, manganese, nickel, and one or more combinations thereof, and lithium, may be utilized. For example, the compounds represented by one or more of the following chemical formulae may be utilized. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤C1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}C₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8).

In the above chemical formulas, A may be selected from Ni, Co, Mn, and one or more combinations thereof; X may be selected from Al, Ni, Co, Mn, Cr, Fe, Mg, Sr, V, a rare earth element, and one or more combinations thereof; D' may be selected from O, F, S, P, and one or more combinations thereof; E may be selected from Co, Mn, and a combination thereof; T may be selected from F, S, P, and one or more combinations thereof; G may be selected from Al, Cr, Mn, Fe, Mg, La, Ce, Sr, V, and one or more combinations thereof; Q may be selected from Ti, Mo, Mn, and one or more combinations thereof; Z may be selected from Cr, V, Fe, Sc, Y, and one or more combinations thereof; J may be selected from V, Cr, Mn, Co, Ni, Cu, and one or more combinations thereof; and L¹ may be selected from Mn, Al, and a combination thereof.

In one or more embodiments, the compounds, described above, may have a coating layer on the surface thereof, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The coating element compound for the coating layer may be amorphous or crystalline. The coating element included in the coating layer may include Mg, Al, Co, K, Na, Ca, Si, Ti, V, Sn, Ge, Ga, B, As, Zr, or one or more mixtures thereof. The coating layer may be disposed in a method having no adverse influence on properties of the positive active material by utilizing these elements in the compound, and, for example, the method may include any coating method such as spray coating, dipping, and/or the like, but is not illustrated in more detail because it is well-suitable (known) in the related field.

In the positive electrode, an amount of the positive active material may be about 90 wt% to about 98 wt% based on the total weight of the positive active material layer.

In one or more embodiments, the positive active material layer may further include a binder and a conductive material. The binder and the conductive material may be included in an amount of about 1 wt% to about 5 wt%, separately based on the total amount of the positive active material layer.

The binder improves binding properties of positive active material particles with one another and with the current collector (e.g., positive electrode current collector). Non-limiting examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, and an acrylated styrene-butadiene rubber.

The conductive material may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, ketjen black, a carbon fiber and/or the like; a metal-based material of a metal powder or a metal fiber including copper, nickel, aluminium, silver, and/or the like; a conductive polymer such as a polyphenylene derivative; or one or more mixtures thereof.

The current collector may include Al, but embodiments of the present disclosure are not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent, or a mixture thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, propyl propionate, decanolide, mevalonolactone, caprolactone, and/or the like. The ether-based solvent may be dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethyl alcohol, isopropyl alcohol, and/or the like, and non-limiting examples of the aprotic solvent may include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, 1,4-dioxolane, sulfolanes, and/or the like.

The non-aqueous organic solvent may be utilized alone or in a mixture. If (e.g., when) the non-aqueous organic solvent is utilized in a mixture, a mixture ratio may be controlled or selected in accordance with a desirable battery performance, and it may be well suitable to those skilled in the related art.

The carbonate-based solvent may include a mixture of a cyclic carbonate and a linear carbonate. The cyclic carbonate and linear carbonate are mixed together in a volume ratio of about 1:1 to about 1:9, and when the mixture is utilized as a non-aqueous organic solvent of the electrolyte, it may have enhanced performance.

In one or more embodiments, the non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

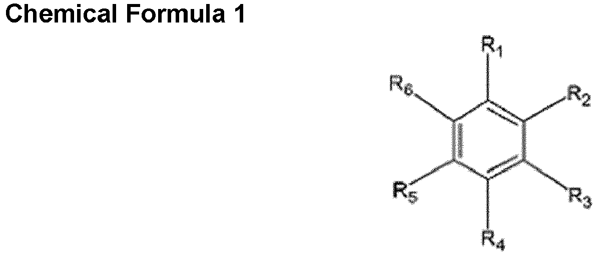

In Chemical Formula 1, R₁ to R₆ may each independently be the same or different and may each independently be selected from hydrogen, a halogen, a C1 to C10 alkyl group, a haloalkyl group (e.g., a C1 to C10 haloalkyl group), and one or more combinations thereof.

Non-limiting examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

In one or more embodiments, the electrolyte may further include vinylethyl carbonate, vinylene carbonate, and/or an ethylene carbonate-based compound represented by Chemical Formula 2 as an additive for improving cycle life.

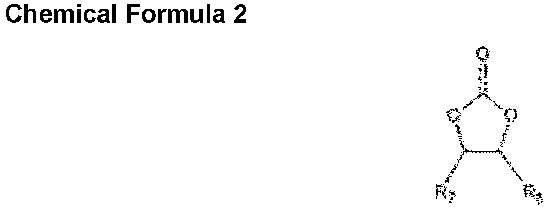

In Chemical Formula 2, R₇ and R₈ may each independently be the same or different and may each be independently hydrogen, a halogen, a cyano group (CN), a nitro group (NO₂), or a C1 to C5 fluoroalkyl group, provided that at least one of R₇ or R₈ is a halogen, a cyano group (CN), a nitro group (NO₂), or a C1 to C5 fluoroalkyl group, and R₇ and R₈ are not concurrently (e.g., simultaneously) hydrogens.

Non-limiting examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. An amount of the additive for improving the cycle-life characteristics may be utilized within an appropriate or suitable range.

The lithium salt dissolved in a non-aqueous organic solvent supplies a battery with lithium ions, enables a basic operation of the rechargeable lithium battery, and improves transportation of the lithium ions between the positive electrode and the negative electrode. Non-limiting examples of the lithium salt may include at least one or two supporting salt selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are each a natural number, for example, an integer of 1 to 20, lithium difluoro(bisoxalato) phosphate, LiCl, Lil, LiB(C₂O₄)₂ (lithium bis(oxalato) borate: LiBOB), and lithium difluoro(oxalato)borate (LiDFOB). A concentration of the lithium salt may be in a range of about 0.1 M to about 2.0 M. If (e.g., when) the lithium salt is included at the above concentration range, the electrolyte may have excellent or suitable performance and lithium ion mobility due to optimal or suitable electrolyte conductivity and viscosity.

In one or more embodiments, a separator may be disposed between the positive electrode and the negative electrode depending on a type or kind of the rechargeable lithium battery. The separator may utilize polyethylene, polypropylene, polyvinylidene fluoride, or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

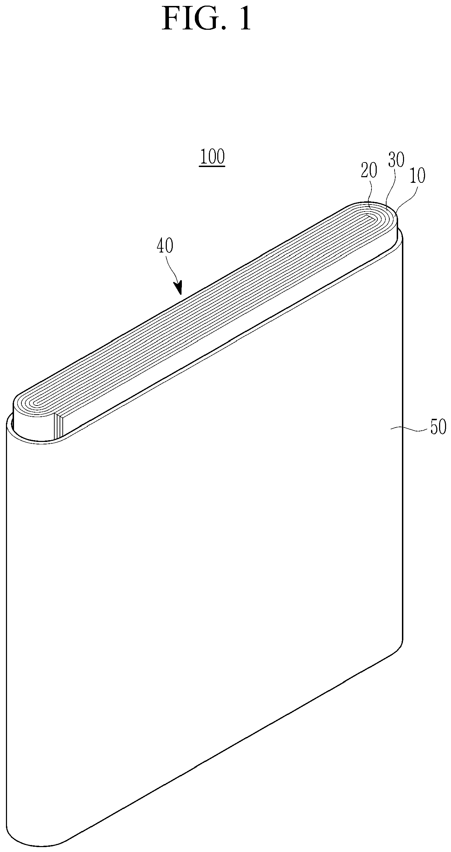

FIG. 1 is an exploded perspective view of a rechargeable lithium battery according to one or more embodiments. The rechargeable lithium battery according to some embodiments is illustrated as a prismatic battery but is not limited thereto and may include variously-shaped batteries such as a cylindrical battery, a pouch battery, and/or the like.

Referring to FIG. 1, a rechargeable lithium battery 100 according to one or more embodiments may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20, and the separator 30.

Hereinafter, examples of the present disclosure and comparative examples are described. These examples, however, are not in any sense to be interpreted as limiting the scope of the present disclosure.

### Example 1

97.5 wt% of an artificial graphite negative active material, 1 wt% of carboxymethyl cellulose, and 1.5 wt% of styrene butadiene rubber were mixed in a water solvent to prepare a negative active material layer slurry.

The negative active material layer slurry was coated on a Cu foil current collector, dried and pressurized to prepare a negative active material layer, thereby producing a negative electrode.

96 wt% of a LiNi_{0.8}Co_{0.1}Mn_{0.1}O₂ positive active material, 2 wt% of ketjen black, and 2 wt% of polyvinylidene fluoride were mixed in an N-methyl pyrrolidone solvent to prepare a positive active material layer slurry.

The positive active material layer slurry was coated on an Al foil current collector, dried, and pressurized to prepare a positive active material layer, thereby producing a positive electrode.

Utilizing the negative electrode, the positive electrode, and an electrolyte, a rechargeable lithium cell was fabricated. The electrolyte prepared by dissolving 1 M LiPF₆ in a mixed solvent of ethylene carbonate and dimethyl carbonate (3:7 volume ratio) was utilized.

The fabricated rechargeable lithium cell underwent two cycles of a formation charge and discharge, charged at 25 °C and discharged at -10 °C twice. The conditions of charge and discharge were the following conditions:
Charge: 1.5 C/ 4.4 V cut-off 0.05 C
Discharge: 0.2 C cut-off 3.0 V.

### Comparative Example 1

A procedure was carried out in substantially the same procedure as in Example 1, except that charging at 25 °C and discharging at -10 °C were performed once.

### Comparative Example 2

A formation charge and discharge was subjected by the same procedure as in Example 1, except that a fabricated rechargeable lithium cell was subjected to a formation charge and discharge of charged at 25 °C and discharged at -20 °C, and then charged at 25 °C and discharged at -10 °C.

### Comparative Example 3

A formation charge and discharge was subjected by the same procedure as in Example 1, except that a fabricated rechargeable lithium cell was subjected to a formation charge and discharge of charged at 25 °C and discharged at 0 °C, and then charged at 25 °C and discharged at -10 °C.

### Comparative Example 4

A formation charge and discharge was subjected by the same procedure as in Example 1, except that a fabricated rechargeable lithium cell was subjected to a formation charge and discharge of charged at 25 °C and discharged at 10 °C, and then charged at 25 °C and discharged at -10 °C.

### Comparative Example 5

A formation charge and discharge was subjected by the same procedure as in Example 1, except that a fabricated rechargeable lithium cell was subjected to a formation charge and discharge of charged at 25 °C and discharged at 25 °C, and then charged at 25 °C and discharged at -10 °C.

### Comparative Example 6

A formation charge and discharge was subjected by the same procedure as in Example 1, except that a fabricated rechargeable lithium cell was subjected to a formation charge and discharge of charged at 25 °C and discharged at 45 °C, and then charged at 25 °C and discharged at -10 °C.

### Experimental Example 1) Scanning Electron Microscopy (SEM) images

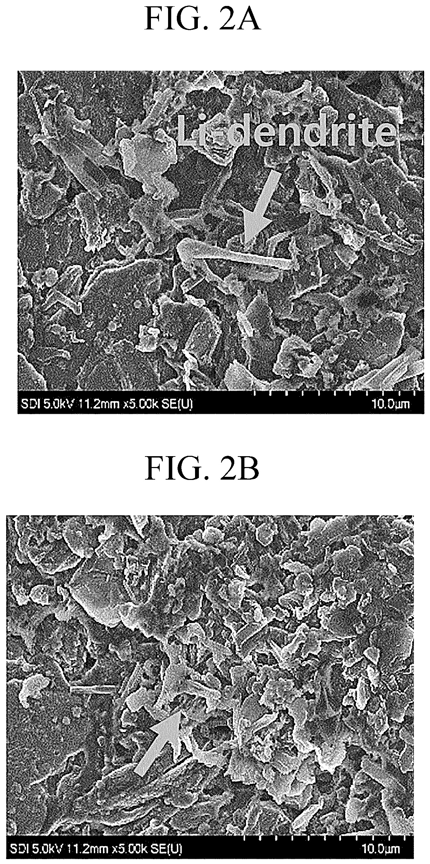

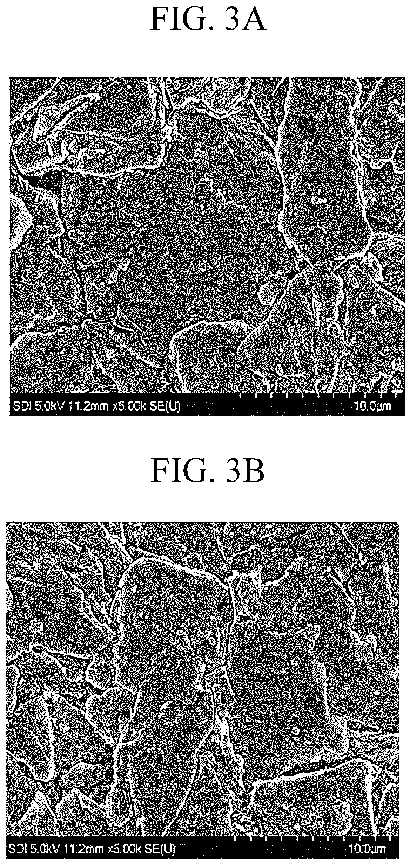

After formation charging and discharging each of the rechargeable lithium cells of Example 1 and Comparative Example 1, the negative electrode was separated. The SEM images were taken for each of the negative electrodes. The results are shown in FIG. 2A, FIG. 2B, FIG. 3A and FIG. 3B, respectively.

FIG. 2A, FIG. 2B, FIG. 3A, and FIG. 3B are SEM images showing measurements at two points on the surface of the negative electrode.

As shown in FIG. 2A and FIG. 2B, the negative electrode of the formation charged and discharged cell according to Example 1 included the formed rod-type or kind lithium dendrites (see, e.g., the arrow pointing to the lithium dendrite rod) with an average size (length) of approximately (about) 5 µm or less. Whereas, as shown in FIG. 3A and FIG. 3B, lithium dendrites were not formed on the negative electrode of the formation charged and discharged cell according to Comparative Example 1.

### Experimental Example 2) Measurement of electrolyte impregnation amount

The negative electrodes were separated from the formation charged and discharged cells of Example 1 and Comparative Examples 1 to 6 and the amount of electrolyte impregnation in these electrodes was each measured. The electrolyte impregnation amount was determined as the amount of P (phosphorus), after measuring amounts of the salts (e.g., lithium salts) distributed in the negative electrode utilizing the µ-XRF (X-ray fluorescence spectrometry) method. The measured P amounts are shown as an electrolyte impregnation amount in Table 1. In Table 1, a top indicates to an upper (a surface contacted to a separator) of the separated negative electrode and a bottom indicates to a bottom (a surface contacted to a current collector) of the separated negative electrode.

**Table 1**

| | Electrolyte impregnation amount (cps, count per second) | |
|---|---|---|
| | TOP | BOTTOM |
| Comparative Example 1 | 45 | 45 |
| Example 1 | 60 | 60 |

As shown in Table 1, the electrolyte impregnation amount of Example 1 exhibited higher than that of Comparative Example 1

### Experimental Example 3) Measurement of impedance

Regarding the rechargeable lithium cells subjected to the formation charge and discharge of Example 1 and Comparative Examples 1 to 6, impedances were each measured at -10 °C, 0 °C and 25 °C, respectively, utilizing a signal of 3 mV in a frequency range of 10 kHz to 1 mHz, as an EIS (electrochemical impedance spectroscopy). Among these results, the results of Example 1 and Comparative Example 1 are shown in Table 2.

**Table 2**

| | Interface resistance (mΩ) | | |
|---|---|---|---|
| | -10 °C | 0 °C | 25 °C |
| Comparative Example 1 | 240.8 | 80.5 | 6.2 |
| Example 1 | 193.5 | 74.1 | 6.3 |

As shown in Table 2, the rechargeable lithium cell of Example 1 exhibited lower interface resistance at a low temperature of 0 °C or less than Comparative Example 1.

### Experimental Example 4) Evaluation of activation energy

Regarding the rechargeable lithium cells subjected to the formation charge and discharge of Example 1 and Comparative Examples 1 to 6, the activation energy was each obtained by utilizing resistances measured at -10 °C, 0 °C and 25 °C and an Arrhenius plot. The results are shown in Table 3.

**Table 3**

| | Activation energy (kJ/mol) |
|---|---|
| Comparative Example 1 | 39.4 |
| Example 1 | 37.3 |

As shown in Table 3, the activation energy value of Example 1 was lower than that of Comparative Example 1, so that charge and discharge reaction of Example 1 will proceed quickly with low activation energy. It may be expected from the results that charge and discharge reaction will occur quickly at low temperatures for Example 1.

### Experimental Example 5) Evaluation of charge transfer resistance, Ret

Regarding the rechargeable lithium cells subjected to the formation charge and discharge of Example 1 and Comparative Examples 1 to 6, AC resistance was each measured within the range of frequency of 10 kHz to 30 mHz utilizing an EIS measurement device of VMP3 available from Biologics Science instruments. The measured resistance refers to the charge transfer resistance of a cell thin layer, and may be a resistance of a thin layer generated via the reaction between the electrolyte and interface/ side product. Among the measured results, the results of Example 1 and Comparative Example 1 are shown in Table 4.

### Experimental Example 6) Evaluation of capacity

The rechargeable lithium cells subjected to the formation charge and discharge according to Example 1 and Comparative Examples 1 to 6 were each fully charged at 1.5 C and discharged at 0.2 C, and then a rated capacity was obtained. The results are shown in Table 4.

The rechargeable lithium cells subjected to the formation charge and discharge according to Example 1 and Comparative Examples 1 to 6 were each charged and discharged at 1.5 C charge/ 0.2 C discharge once at 25 °C, and discharge capacity when the cell voltage reached to 3.4 V and discharge capacity when the cell voltage reached to 3.0 V were measured.

The rechargeable lithium cells subjected to the formation charge and discharge according to Example 1 and Comparative Examples 1 to 6 were each discharged at 0.2 C and at -10 °C once and this procedure was repeated twice. A discharge capacity was measured when the cell voltage reached to 3.4 V.

A ratio of discharge capacity measured at -10 °C relative to discharge capacity measured at a room temperature was calculated. The results are shown in Table 4, as a capacity of 3.4 V.

**Table 4**

| | Nominal capacity (mAh) | Rct (mΩ) | 3.4 V capacity (%) |
|---|---|---|---|
| Comparative Example 1 | 4648 | 31.7 | 56.2 |
| Comparative Example 2 | 4632 | - | 63.6 |
| Comparative Example 3 | 4634 | - | 61.0 |
| Comparative Example 4 | 4628 | - | 60.9 |
| Comparative Example 5 | 4623 | - | 60.6 |
| Comparative Example 6 | 4618 | - | 61.1 |
| Example 1 | 4642 | 26.69 | 63.0 |

As shown in Table 4, the rechargeable lithium cell of Example 1, which was subjected to the formation charge and discharge, had lower transfer resistance, i.e., interface resistance compared to Comparative Example 1. The low temperature and high voltage discharge capacity of the rechargeable lithium cell according to Example 1 which was subjected to the formation charge and discharge was improved compared to each of Comparative Examples 1 and 3 to 6.

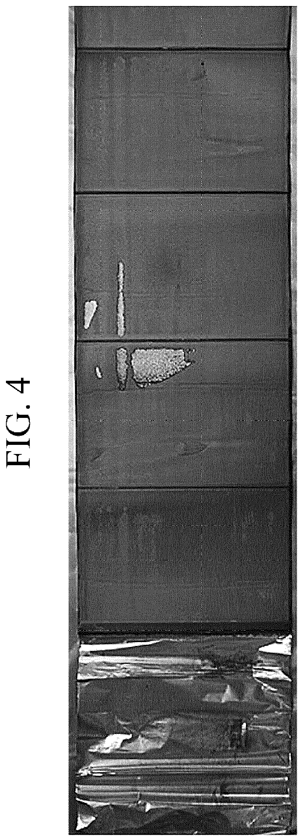

In the case of Comparative Example 2, discharging was carried out at the extremely low temperature of -20 °C, as a result, excessive lithium was deposited as shown in FIG. 4 which was an image showing the negative electrode disassembled after charging and discharging, making it unusable as a battery. In Comparative Example 2, it is believed that the high capacity at 3.4 V is due to the deposited lithium exhibiting capacity.

As utilized herein, the terms "substantially," "about," or similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the scope of the appended claims and equivalents thereof.

## Claims

1. A rechargeable lithium battery, comprising:
a negative electrode comprising a current collector, a negative active material layer on the current collector, and lithium dendrites on a surface of the negative active material layer and having an average size of about 5 µm or less and a rod-like shape;
a positive electrode; and
a non-aqueous electrolyte.

2. The rechargeable lithium battery as claimed in claim 1, wherein the rechargeable lithium battery is obtained by performing a formation charge and discharge.

3. The rechargeable lithium battery as claimed in claim 2, wherein the formation charge and discharge is performed by charging and discharging, the discharging being of a subzero temperature discharge and the charging being of a room temperature charge.

4. The rechargeable lithium battery as claimed in claim 3, wherein the room temperature charge is performed at a room temperature of about 10 °C to about 30 °C.

5. The rechargeable lithium battery as claimed in claim 3 or claim 4, wherein the subzero temperature discharge is performed at a subzero temperature of less than about 0 °C and more than about -20 °C.

6. The rechargeable lithium battery as claimed in any one of claims 3 to 5, wherein the formation charge and discharge are performed by the charging and discharging for two to five cycles.

7. The rechargeable lithium battery as claimed in any one of claims 1 to 6, wherein the lithium dendrites have an average size of about 1 µm to about 5 µm.

8. The rechargeable lithium battery as claimed in any one of claims 1 to 7, wherein the negative active material layer comprises a negative active material, and
the negative active material comprises a carbon-based negative active material, a silicon-based negative active material, or a combination thereof.

9. The rechargeable lithium battery as claimed in claim 8, wherein the carbon-based negative active material comprises crystalline carbon, amorphous carbon, or a combination thereof.

10. The rechargeable lithium battery as claimed in claim 9, wherein
the crystalline carbon comprises natural graphite, artificial graphite, or a combination thereof, and
the amorphous carbon comprises soft carbon, hard carbon, mesophase pitch carbide, sintered cocks, or one or more combinations thereof.

11. The rechargeable lithium battery as claimed in any one of claims 8 to 10, wherein the silicon-based negative active material comprises Si, a Si-C composite, SiOₓ (0<x<2), Si-Q alloy (wherein Q is an element selected from an alkali metal, an alkaline-earth metal, a Group 13 element, a Group 14 element, a Group 15 element, a Group 16 element, a transition metal, a rare earth element, and one or more combinations thereof, and not Si), or one or more combinations thereof, optionally wherein the Si-C composite comprises silicon particles and amorphous carbon coated on a surface of the silicon particles.

12. The rechargeable lithium battery as claimed in any one of claims 1 to 11, wherein the positive electrode comprises a positive active material layer comprising a positive active material, and
the positive active material comprises one or more lithiated intercalation compounds that reversibly intercalate and deintercalate lithium ions.

13. The rechargeable lithium battery as claimed in any one of claims 1 to 12, wherein the non-aqueous electrolyte comprises a lithium salt and a non-aqueous organic solvent.

14. The rechargeable lithium battery as claimed in claim 13, wherein the non-aqueous organic solvent comprises a carbonate-based solvent, an ester-based solvent, an ether-based solvent, a ketone-based solvent, an alcohol-based solvent, aprotic solvent, or a mixture thereof, optionally wherein the carbonate-based solvent comprises a cyclic carbonate and a linear carbonate.

15. The rechargeable lithium battery as claimed in claim 13 or claim 14,
wherein the lithium salt comprises at least one selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N, LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (wherein x and y are each independently an integer of 1 to 20), lithium difluoro(bisoxalato) phosphate, LiCl, Lil, LiB(C₂O₄)₂, and lithium difluoro(oxalato)borate.
